# EUROPÄISCHE PATENTSCHRIFT

(11) **EP 1 466 952 B1**
(45) Veröffentlichungstag und Bekanntmachung des Hinweises auf die Patenterteilung: **27.02.2008**
(21) Anmeldenummer: 04005387.8
(22) Anmeldetag: 06.03.2004
(51) Int. Cl.: C09J 7/04, B05B 15/04, D21F 11/00

(54) **Abdeckklebeband**
Masking tape
Ruban de masquage

(30) Priorität: 11.04.2003 DE 10316995
(43) Veröffentlichungstag der Anmeldung: 13.10.2004
(73) Patentinhaber: tesa AG, 20253 Hamburg (DE)
(72) Erfinder: Yun, Petra, 22767 Hamburg (DE); Müssig, Bernhard, 21218 Seevetal (DE); Zielske, Dieter, 25355 Barmstedt (DE); Grittner, Norbert, 22527 Hamburg (DE)

(56) Entgegenhaltungen:
- WO-A-96/31647
- DE-A- 3 835 507
- DE-A- 19 939 075
- ANONYMOUS: "Mould paper" INTERNET ARTICLE, [Online] 5. April 2003 (2003-04-05), XP002287257 Gefunden im Internet: <URL:http://web.archive.org/web/2003042322 3143/eng.cariolaro.com/> [gefunden am 2004-07-06]
- KURT H. BAUER, KARL-HEINZ FRÖMMING, CLAUS FÜHRER: "Lehrbuch der Pharmazeutischen Technologie" 1999, WISSENSCHAFTLICHE VERLAGSGESELLSCHAFT MBH , STUTTGART * Seite 429 - Seite 430 *
- TRPACKAGING.COM, [Online] 2000, Gefunden im Internet: URL:http://www.trpackaging.com/packaging/n ews.nsf/0/500348361359e4dec12569a7006101ce ?OpenDocument> [gefunden am 2005-05-09]
- JÜRGEN FALBE, MANFRED REGITZ: "Römpp Chemie Lexikon" 1990, GEORG THIEME VERLAG , STUTTGART NEW YORK * Seite 1755 - Seite 1756 *

## Beschreibung

Die vorliegende Erfindung betrifft ein Abdeckklebeband mit einem dehnbaren Papierträger als Trägermaterial, das zumindest einseitig mit einer lösemittelbasierten oder lösemittelfreien selbstklebenden Klebebeschichtung versehen ist.

Selbstklebende Abdeckbänder, im folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.
Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.
Diese Rohstoffe und Verfahrensschritte sind ausschließlich der Kunst des Papiermachers überlassen und stehen dem Hersteller von Abdeckklebebändem daher nicht zur Verfügung, da dieser im Regelfall das Rohpapier als Basis der Abdeckklebebands zukauft.

Insbesondere die Dehnbarkeit ist aber eine unverzichtbare Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist; das Abdeckklebeband kann bei der Handapplikation weichen Konturen perfekt nachgeführt werden und führt so zu einer sauberen, unterläuferfreien Farbkante. Die dafür erforderliche Dehnung in Längsrichtung liegt bei sogenannten Flachkrepps im Bereich von 10 %, bei sogenannten Hochkrepps um 50 %. Zugfestigkeit und Dehnung sind so aufeinander abgestimmt, dass es problemlos gelingt, während der manuellen Applikation an der Außenkurve des Abdeckklebebands einen Teil der Dehnung ohne Rissgefahr herauszuziehen und dadurch eine Kurve zu erzeugen.

Im folgenden soll auf die nach dem Stand der Technik üblichen Prozesse zur Herstellung von dehnfähigen bahnförmigen Papierträgern eingegangen werden.

Für Abdeckklebebänder werden üblicherweise als Trägermaterial maschinell gekreppte Papiere eingesetzt, die in der Regel aus 100 % Natronkraft-Zellstoff (NBSK) hergestellt werden. Im sogenannten Nasskrepp-Verfahren erfolgt die Kreppung meistens in der Papiermaschine mit Hilfe eines Kreppschabers auf einem sogenannten Kreppzylinder entweder innerhalb beziehungsweise am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im allgemeinen die maximal mögliche Geschwindigkeit der Papiermaschine und verkürzt die Länge der Papierbahn um ca. 10 bis 20 %. Die Falten werden beim anschließenden Trocknungsprozess in wesentlichen durch Ausbildung von Wasserstoffbrückenbindungen fixiert, so dass sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht und so dem jeweiligen Anwendungszweck angepasst werden. Sie wird üblicherweise durch Messen des Kraft-Dehnungs-Diagramms bestimmt. Nach diesem Verfahren lassen sich sogenannte Flachkrepps mit Reißdehnungswerten in Längsrichtung von bis zu 20 % erzeugen. Die Dehnung in Querrichtung beträgt im allgemeinen nicht mehr als ca. 5 %.

Ein weiteres Verfahren zur Herstellung von dehnbaren Papierträgern für Abdeckklebebänder ist das sogenannte CLUPAK-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung wie oben beschrieben ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Eine Anschmiegsamkeit von aus solchen Papieren hergestellten Abdeckklebebands an sphärische Oberflächen ist bei manueller Applikation deshalb kaum gegeben. Außerdem wird das Papier bedingt durch das Verfahren in z-Richtung stark verdichtet und nimmt deshalb während der in der Abdeckklebeband-Herstellung üblichen Imprägnierung nur schlecht Dispersionen auf. Üblicherweise werden deshalb für Abdeckklebebands geleimte Clupak-Träger ohne Imprägnierung eingesetzt. Die erzielten Dehnungen in Längsrichtung liegen ebenfalls bei bis zu 20 %. Zu diesem Verfahren und dem daraus hergestellten Produkt sei auf die DE 38 35 507 A1 verwiesen.

Für die Erzielung sehr hoher Dehnwerte von bis zu etwa 50 % wird neben dem klassischen Nasskreppverfahren, das hierzu mit besonders groben Kreppschabem betrieben wird, auch das Trockenkreppverfahren angewendet. Dabei wird ein glattes Papier auf einer separaten Maschine nach Wiederanfeuchten mit einer Bindemittellösung (Stärke, CMC, PVAI) wie oben beschrieben gekreppt und anschließend erneut getrocknet. Auf beide Weisen erhält man sogenannte Hochkrepps, die sich neben der extremen Dehnfähigkeit durch eine große Dicke und eine sehr raue Oberfläche auszeichnen.

Diese bahnförmigen Papierträger bestimmen durch ihre Eigenschaften nicht nur die späteren Anwendungseigenschaften des Abdeckklebebands maßgeblich, sondern diese Eigenschaften sind auch kennzeichnend für und teilweise einschränkend bei der Herstellung derselben.

Aus der DE 101 20 148 A1 ist ein Abdeckklebeband aus einem Trägermaterial und einer darauf zumindest einseitig aufgebrachten Klebebeschichtung bekannt. Das Trägermaterial besteht aus einem ungekreppten bahnförmigen Material, vorzugsweise aus Papier, dessen Reißdehnung durch mechanisches Prägen auf einen Wert zwischen 2 und 70 % eingestellt worden ist.
Die Rautiefe des geprägten Trägermaterials ist in einer ersten vorteilhaften Ausführungsform durch eine Kalandrierung reduziert, ohne die Dehnung des Trägermaterials wesentlich zu beeinträchtigen.

Weiterhin offenbart die DE 199 39 075 A1 ein Abdeckband, enthaltend einen bahnförmigen Träger auf Papierbasis oder Vliesbasis und eine auf einer der beiden gegenüberliegenden Seiten des Trägers aufgebrachten Beschichtung aus einer druckempfindlichen Selbstklebemasse auf Basis von nicht-thermoplastischen Elastomeren, erhalten durch ein Verfahren zur kontinuierlichen lösungsmittelfreien und mastikationsfreien Herstellung in einem kontinuierlich arbeitenden Aggregat mit einem Füll- und einem Compoundierteil, bestehend aus den folgenden Schritten
a) Aufgabe der Festkomponenten der Selbstklebemasse wie Elastomere und Harze in den Füllteil des Aggregats,
   gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze gegebenenfalls in geschmolzenem Zustand in den Compoundierteil,
d) Herstellung einer homogenen Selbstklebemasse im Compoundierteil,
g) Austragen der Selbstklebemasse und
h) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so dass die Selbstklebemasse bei Durchgang durch ein oder mehrere Walzenspalte auf die gewünschte Dicke ausgeformt wird, und
wobei
die Walzen des Auftragswerkes einzeln auf Temperaturen von 20 °C bis 150 °C eingestellt werden können.

Aufgabe der Erfindung ist es, ein Abdeckklebeband mit einem Trägermaterial zur Verfügung zu stellen, wobei das Trägermaterial unabhängig vom Prozess der Papierherstellung mit einer definierten Dehnbarkeit ausgestattet ist und die Dehnbarkeit in Betrag und Charakter so eingestellt ist, dass es den vorgesehenen Anforderungen in besonderem Maße gerecht wird.

Gelöst wird diese Aufgabe durch die Abdeckklebeband, wie es im Hauptanspruch niedergelegt ist. Gegenstand der Unteransprüche sind vorteilhafte Weiterbildungen des Erfindungsgegenstands.

Demgemäß betrifft die Erfindung ein Abdeckklebeband mit einem dehnbaren Papierträger als Trägermaterial, das zumindest einseitig mit einer lösemittelbasierten oder lösemittelfreien selbstklebenden Klebebeschichtung versehen ist, wobei der Papierträger aus einem Papier besteht, das in einem Prozess hergestellt wird, bestehend aus den Prozessschritten:
- Zugabe von pflanzlichem Fasermaterial in einen Stofflöser
- Vermischen des Fasermaterials mit Wasser
- Mahlen der Fasern zur Herstellung einer Faserstoffdispersion, die anschließend in einen Stoffauflauf überführt wird
- Dosierung der gemahlenen Faserstoffdispersion bevorzugt auf ein Formersieb und kontinuierliches Reduzieren des Wassergehalts zur Bildung einer Papierbahn, wobei die Reduzierung durch Schwerkraft und/oder Vakuum bevorzugt sind
- Erste Trocknung der Papierbahn, so dass der Feststoffgehalt in der Papierbahn zwischen 15 Gew.-% und 35 Gew.-% liegt
- Formen der Papierbahn in einer ersten Pressenstation
- Zweite Trocknung der Papierbahn, so dass der Feststoffgehalt in der Papierbahn zwischen 50 Gew.-% und 60 Gew.-% liegt, und gleichzeitiges Dehnen der Papierbahn in Längsrichtung
- Verdichten der Papierbahn in Längsrichtung und gleichzeitig in Querrichtung in einer zweiten Pressenstation,
   bestehend aus mindestens einem Walzenpaar mit Walzen unterschiedlichen Typs, wobei ein Walzenpaar aus einer harten Walze und einer Gummiwalze besteht, wobei die harte Walze eine im Umfang gerillte Struktur aufweist, während die Gummiwalze glatt ist und am Umfang langsamer als die harte Walze läuft
- Endtrocknung der Papierbahn, so dass der Wassergehalt in der Papierbahn, zwischen 15 Gew.-% und 4 Gew.-%, vorzugsweise zwischen 10 Gew.-% und 8 Gew.-% liegt
- Überführung der Papierbahn in ein Glättwerk
so dass das Papier in Längsrichtung eine Bruchdehnung von mindestens 15 % und in Querrichtung eine Bruchdehnung von mindestens 5 % aufweist.

In einer ersten vorteilhaften Ausführungsform wird die aus der Faserstoffsuspension hergestellte Papierbahn in der ersten Trocknung durch mechanische Entwässerung auf einen Trockengehalt von 25 bis 35 Gew.-%, bevorzugt 30 bis 35 Gew.-%, gebracht.

In einer zweiten vorteilhaften Ausführungsform wird die geformte Papierbahn in der zweiten Trocknung durch thermische Trocknung auf einen Trockengehalt von 50 bis 60 in Reinschrift gebracht wird.

Im folgenden wird das Verfahren zur Herstellung des vorteilhaft für ein Abdeckklebeband verwendeten Papierträgers nochmals detailliert erläutert.

Das Verfahren ist dabei besonders vorteilhaft ausgestaltet, und auch die angegebenen Parameter sind bevorzugte. Keinesfalls soll hiermit die Erfindung in irgendeiner Art und Weise eingeschränkt werden.

Die Ballen mit Faserrohmaterial werden mit einer bestimmten Menge Wasser in den Stofflöser gegeben und vermischt. Die Faserstoffsuspension wird gerührt, und es werden Chemikalien zugegeben. Deren Aufgabe ist es, die maximale Festigkeit der Fasern anzuheben, die Faserstoffsuspension mit Wasser besser zu homogenisieren und dem fertigen Papier spezielle Eigenschaften zu verleihen.

Das Faserrohmaterial besteht bevorzugt aus pflanzlichen Fasern, bei denen es sich um langfaserige Zellulose, kurzfaserige Zellulose oder auch andere pflanzliche Fasern handeln kann, die nicht aus Holz gewonnen werden (Baumwolllinter, Hanf, Flachs, Esparto, Kenaf). Die unterschiedlichen Materialen können auf der gleichen oder vorzugsweise auf verschiedenen Anlagen verarbeitet werden.

Durch den Rotor wird das Material zunehmend aufgeschlossen und unter Bewahrung der Faserlänge intensiv mit dem Wasser und den zugegebenen Chemikalien vermischt. Bei den verwendeten Additiven kann es sich um Stärken handeln, welche die Fasern zusammenbinden und ihre höchste Festigkeit erhöhen, oder um Carboxymethylzellulose (CMC), welche die Suspension stabilisiert und so ein Koagulieren vermeidet, oder auch um synthetische Harze, welche die Faserbindungen verbessern und für eine elastische Bindung sorgen.

Eine Faserstoffsuspension aus Fasern, Wasser und Additiven verlässt den Stofflöser mit einem Trockengehalt von ca. 15 Gew.-% und wird einem anschließenden mehrstufigen Mahlprozess zugeführt. Durch den Prozess des Mahlens in einer bevorzugten Kaskade von mehreren mit Lavascheiben bestückten Aggregaten werden besondere Eigenschaften auf die Faserstoffsuspension übertragen. Die Fasern werden dabei insbesondere durch Hydratisierung und quetschende und fibrillierende Mahlung bearbeitet, ohne sie wesentlich zu kürzen.
Als Ergebnis dieser Behandlung sind die Fasern in der Weise modifiziert, dass sich besonders viele und großflächige Faserverknüpfungspunkte bilden können, durch die sich eine gleichmäßige und intensive Bindung der Fasern aneinander ergibt. Diese Struktur ist essentiell für die Eigenschaften, die das Entprodukt aufweisen soll.

Der Mahlgrad der Faserstoffsuspension kann auf der Basis des objektiven Parameters SR (Shopper Riegler) bestimmt werden. Gemäß der hier vorliegenden Erfindung weist die Faserstoffsuspension beim Ausgang aus der Mahlung vorzugsweise einen Mahlgrad zwischen 25 und 65 DEG SR, besonders vorzugsweise 30 DEG und 60 DEG SR und ganz beosnders vorzugsweise zwischen 40 und 60 DEG SR auf, je nach dem Gewicht in Gramm des herzustellenden Papiers.

Beim Ausgang aus der letzten Mahleinheit kann die Faserstoffsuspension, die, wie beschrieben bevorzugt einen Grad zwischen 30 und 60 DEG SR hat, in einen Holländer überführt werden, welcher bei einer Dichte von ca. 20 % arbeitet und dessen Funktion es ist, die Fasern zu hydratisieren, zu quellen und zu kräuseln. Anschließend wird die Faserstoffsuspension in eine Lagerbütte überführt und von dort in den Stoffauflauf, von dem aus sie mit einem Feststoffgehalt von ca. 0,5 bis 1 Gew.-% durch den Stoffaustrittsspalt auf das darunter liegende Sieb der Nasspartie strömt.

Im ersten Teil dieses Maschinensiebes neigt die Faserstoffsuspension zur kontinuierlichen Wasserabgabe, zuerst durch Schwerkraft, dann durch Absaugen mit Vakuum, bis es am Ausgang des Siebes einen Trockengehalt von ca. 18 Gew.-% aufweist. Anschließend wird das Papier in die Pressenpartie weitergeleitet, wo es zwischen zwei Presswalzen hindurchläuft und dadurch bis zu einem Trockengehalt von ca. 35 Gew.-% weitergetrocknet wird.

Dann kommt das Papier optional in die Imprägnierstation, wo es mit einem oder mehreren flüssigen Additiven behandelt wird, deren Aufgabe es ist, die Dehnungseigenschaften des Papiers oder die Prozesseigenschaften zu verbessern. Die Imprägnierung wird vorzugsweise mit einer Sprühdüse realisiert, aber auch andere Systeme sind möglich, zum Beispiel indem man das Papier durch Tanks führt, in denen sich Imprägnierflüssigkeit befindet. In jedem Fall ist die Menge an Imprägnierung kontrollierbar, was von Vorteil ist, sowohl für die Kosten als auch, um die erzielten Eigenschaften genau einzustellen und konstant zu halten.

Das derart ausgerüstete Papier wird dann einem ersten Formschritt zugeführt der aus einer oder mehreren (gleichen oder unterschiedlichen) Einheiten bestehen kann.

Jede Einheit kann alternativ bestehen aus:
(5) Eine obere Walze mit einem strukturierten Profil und eine glatte (weiche) untere Walze mit einem glatten Standard Filz, wobei sich die Papierbahn zwischen der oberen Walze und dem Filz befindet.
(6) Zwei glatte Walzen, zwischen denen sich ein strukturiertes Filz so befindet, dass es eine Papierbahn, die zwischen Filz und oberer Walze läuft, formen kann, wobei sich die Papierbahn zwischen der oberen Walze und dem Filz befindet.
(7) Eine obere Walze mit strukturiertem Profil und eine untere glatte Walze (ohne Filz)
(8) Zwei glatte Walzen und ein glatter sowie ein strukturierter Filz, wobei sich die Papierbahn zwischen der oberen Walze und dem oberen Filz befindet.

Die Verwendung mehrerer gleicher oder verschiedener formender Einheiten ermöglicht Strukturen im Papier von nahezu jedem beliebigen Design.

Das so vorgeformte Papier wird bis zu einer konstanten Restfeuchte von 50 bis 60 Gew.-% getrocknet, indem man es über beheizte Walzen oder durch einen Trockenkanal führt. Diesen vorgeschaltet kann eine weitere Trocken- oder Heizstation sein, vorzugsweise als Infrarot-Station.

Beim Transfer von der Pressen- zur Kompaktierstation werden die Walzengeschwindigkeiten so angepasst, dass das Papier entsprechend seiner maximalen Festigkeit in Längsrichtung gedehnt wird. Dies führt zu einer Kontraktion in Querrichtung, und somit zu einer Reserve an Dehnung in Querrichtung.

In der Kompaktierstation wird das Papier in Längs- und in Querrichtung verdichtet und damit die Dehnung in Längs- und Querrichtung erzeugt. Hierzu führt man es durch mindestens ein Walzenpaar unterschiedlichen Typs und unterschiedlicher Oberflächenbeschaffenheit und mit unterschiedlichen Geschwindigkeiten.
Die untere Walze eines jeden Walzenpaares ist eine Gummiwalze, die mit einer bestimmten Geschwindigkeit läuft. Die obere Walze ist aus Metall und hat eine Vielzahl von Oberflächenrippen, zum Beispiel umlaufende Rippen, und läuft mit höherer Geschwindigkeit. Durch den Andruck und entsprechend der Geometrie der Metallwalzenoberfläche - welche mit der Gummioberfläche der unteren Walze wechselwirkt - wird eine Strukturierung im Papier, zum Beispiel eine Rillung in Längsrichtung erzeugt. Gleichzeitig, hauptsächlich verursacht durch die unterschiedlichen Walzengeschwindigkeiten, erfolgt eine Bremswirkung durch die Gummiwalze und dadurch eine Verdichtung in Längsrichtung.

Die Dehnbarkeit wird dadurch erzeugt, dass auf der Papiermaschine die noch feuchte Papierbahn in einem Walzenspalt zwischen einer in Richtung des Umfanges gerillten harten Walze, die am Umfang etwa mit Bahngeschwindigkeit läuft, und einer gegenüber der ersten Walze weicheren Walze, die am Umfang langsamer als die erste Walze läuft, gleichzeitig in Längs- und Querrichtung gestaucht und profiliert wird.

Im Anschluss an die Verdichtung wird das Papier auf eine Restfeuchte von 4 bis 15 Gew.-%, vorzugsweise zwischen 8 Gew.-% und 10 Gew.-%, getrocknet. Dabei ist anzumerken, dass die Walzengeschwindigkeit bis zum Ausgang dieser Trockenstation so angepasst wird, dass das Papier keinem Zug ausgesetzt ist und das längsverdichtete Papier nichts von seiner Dehnbarkeit in Längsrichtung verliert.

Nach der Trockenstation bekommt das Papier optional eine Satinage, wodurch zum Beispiel die Bedruckbarkeit des hergestellten Papiers verbessert wird. Es wird mit einer Spaltlast von 10 bis 100 kg/cm, bevorzugt mit 40 bis 60 kg/cm betrieben.

Schließlich läuft das Papier in eine anschließende Wickelstation. Vor dieser kann eine weitere Imprägnier- und Trockenstation betrieben werden, um die Bedruckungseigenschaften zu verbessern, wenn dies benötigt wird.

Das Teilverfahren zur Herstellung des Papiers ist in der EP 0 824 619 A1 offenbart. Auf diese Offenbarung wird ausdrücklich Bezug genommen.
Das derartig hergestellte Papier ist dem Fachmann als "mould paper" bekannt.

Das Herstellungsverfahren kann je nach Anforderung an das Trägerpapier verändert werden.

So kann
- eine Masseleimung bei der Papierherstellung für bessere Feuchtigkeitsresistenz und höhere Rupf- und Spaltfestigkeit sorgen,
- eine Kalandrierung für eine Verringerung der Profiltiefe sorgen, damit weniger Klebmasseauftrag für gleiche Klebkräfte notwendig ist,
- eine Verringerung, gegebenenfalls ein vollständiger Verzicht auf die Rillung und damit die gegenüber normalem Flachkrepp erhöhte Dehnung in Querrichtung für einen Erhalt der Längsdehnung und Festigkeit bei weiter verringerter Dicke sorgen.

Weiter vorzugsweise wird die Trägerbahn dreidimensional bleibend verformt, vorteilhaft durch einen Tiefziehprozess.

In einer vorteilhaften Ausführungsform findet zwischen der Papierherstellung und Aufbringen der Klebebeschichtung eine Kalandrierung des Trägermaterials und/oder eine weitere Imprägnierung mit Polymerdispersionen statt.

Weiterhin kann gegebenenfalls ein Trennlack und/oder Primer zumindest einseitig auf das Trägermaterial aufgebracht werden.

Das Trägermaterial besteht aus einem Papier, das in Längsrichtung eine Bruchdehnung von mindestens 15 %, bevorzugt aber von mindestens 20 % und in Querrichtung eine Bruchdehnung von mindestens 5 %, bevorzugt aber von mindestens 10 %, ganz bevorzugt aber mindestens 15 % aufweist.

Als Bruchdehnung bezeichnet man dabei die beim Zugversuch eingetretene Verlängerung eines Probestreifens im Augenblick des Reißens, ausgedrückt in Prozenten der ursprünglichen Einspannlänge.

In einer vorteilhaften Ausgestaltung der Erfindung liegt das Flächengewicht des Trägermaterials bei 35 bis 250 g/m², bevorzugt bei 50 bis 200 g/m², ganz bevorzugt bei 70 bis 150 g/m² liegt.

Die erfindungsgemäße Verwendung des dehnbaren und insbesondere verdichteten Papierträger als Trägermaterial für Haftklebebänder hat gegenüber der Verwendung der bekannten Hochkrepppapierträger folgende Vorteile:
- Durch hohe Längsdehnung kann das dem Flachkrepp vergleichbar leichte und billige Papier auch für klassische Hochkrepp-Anwendungen eingesetzt werden, die normalerweise teurere Hochkrepp-Papierträger erfordern.
- Im Gegensatz zu Hochkrepp ist das Trägermaterial wesentlich dünner bei gleicher Festigkeit, was zu einer flacheren Lackkante beim Einsatz als Abdeckklebeband führt.
- Durch die Längsstruktur ergeben sich wesentlich sauberere Lackkanten als bei der Querstruktur von anwendungsgerecht gedehnten klassischen Hoch- oder Flachkrepps, die häufig Farbunterläufer in die Kreppfalten hinein erzeugt.
- Selbst im nicht gedehnten Zustand der Trägerbahn resultiert eine sauberere Lackkante durch die Längsstruktur gegenüber nicht vollständig gedehntem Hochkrepp.
- Durch den einstufigen Herstellungsprozess lässt sich das Trägermaterial preiswerter erzeugen.
- Das als Trägermaterial eingesetzte Papier zeigt eine bessere Fingerfreundlichkeit durch seine Längsstruktur gegenüber der groben Querstruktur der Hochkrepps.
- Die bei geringen Dehnungen höheren Zugkräfte erlauben eine besser kontrollierte Nutzung der Dehnungsreserven.
- Durch Längsrillen im Träger ergeben sich geringere Abrollkräfte und weicheres Abrollverhalten.

Die erfindungsgemäßen Verwendung des dehnbaren und insbesondere verdichteten Papierträger als Trägermaterial für Haftklebebänder hat gegenüber der Verwendung der bekannten Flachkrepppapierträger folgende Vorteile:
- Die Längsdehnung des erfindungsgemäßen Trägers kann höher als beim klassischen Flachkrepp eingestellt werden, daher sind engere Kurven und eine faltenfreiere Verklebung auf sphärischen Oberflächen möglich.
- Auch unimprägniert ist das Trägerpapier dicht gegenüber Anstrichstoffen durch stärkere Mahlung, Verdichtung und damit geringe Saugfähigkeit (Saughöhe).
- Durch eine stärker fibrillierende und weniger schneidende Mahlung und durch die Verdichtung ist der Papierträger wesentlich fester als ein gleichschweres Flachkrepp.
- Durch Ersatz des festigkeitsreduzierenden Kreppvorganges durch einen festigkeitssteigernden Verdichtungsvorgang im dehnungserzeugenden Walzenspalt wird bei gleichem Zellstoffeinsatz eine vergleichsweise hohe Festigkeit des dehnfähigen Papieres erreicht.
- Durch Längsrillen im Träger ergeben sich geringe Abrollkräfte und weiches Abrollverhalten auch ohne Lackierung.
- Sollte ein Release eingesetzt werden, kann mit einem geeigneten Beschichtungsverfahren (zum Beispiel Direkt-Gravur oder offset-Gravur-Beschichtung) selektiv eine Teillackierung der Längsrippen vorgenommen werden und somit Releaselack gespart werden.
- Gleichzeitig ist durch weniger Release die Farblackverankerung besser als bei Flachkrepp.
- Aus den Längsrillen resultiert nur eine partielle Wirksamkeit der Klebmasse, daher besonders leichte und gleichmäßige Demaskierbarkeit von sensiblen Untergründen.
- Die Kosten bei der Papierveredelung durch Reduzierung oder Wegfall von Release und/oder Imprägnierung aufgrund höherer Festigkeit des Rohpapiers und der Längsstruktur sind geringer.
- Die ungewöhnlich hohe Querdehnung ermöglicht die faltenfreie Überklebung von Profilen wie zum Beispiel Kabeln, Zierleisten u.ä. in Längsrichtung.
- Die ungewöhnlich hohe Querdehnung kann hohe Belastungen in Querrichtung ausgleichen, wie sie zum Beispiel durch Schrumpf von Papiermasken in der Wärme auftreten.
- Die Strukturunterschiede der beiden Seiten sind größer als bei Flachkrepp, daher kann wahlweise Beschichtung der konvex oder konkav gerillten Seite genutzt werden, um besonders geringe Abrollkräfte (Trennlack auf konkaver Seite) oder Klebkräfte (Haftklebmasse auf konkaver Seite) zu erreichen.
- Die Längsstruktur verhindert das Fließen oder Kriechen der Farblacke quer über das Klebeband auf den nicht bemalten Untergrund.
- Durch die Tiefziehfähigkeit können Klebebänder mit dreidimensionaler Struktur erzeugt werden, zum Beispiel am Rand selbstklebende Abdeck-Kappen oder Hütchen.

## Patentansprüche

1. Abdeckklebeband mit einem dehnbaren Papierträger als Trägermaterial, das zumindest einseitig mit einer lösemittelbasierten oder lösemittelfreien selbstklebenden Klebebeschichtung versehen ist, wobei der Papierträger aus einem Papier besteht, das in einem Prozess hergestellt wurde, bestehend aus den Prozessschritten:
• Zugabe von pflanzlichem Fasermaterial in einen Stofflöser
• Vermischen des Fasermaterials mit Wasser
• Mahlen der Fasern zur Herstellung einer Faserstoffdispersion
• Dosierung der gemahlenen Faserstoffdispersion und kontinuierliches Reduzieren des Wassergehalts zur Bildung einer Papierbahn
• Erste Trocknung der Papierbahn, so dass der Feststoffgehalt in der Papierbahn zwischen 15 Gew.-% und 35 Gew.-% liegt
• Formen der Papierbahn in einer ersten Pressenstation
• Zweite Trocknung der Papierbahn, so dass der Feststoffgehalt in der Papierbahn zwischen 50 und 60 Gew.-% liegt, und gleichzeitiges Dehnen der Papierbahn in Längsrichtung
• Verdichten der Papierbahn in Längsrichtung und gleichzeitig in Querrichtung in einer zweiten Pressenstation,
bestehend aus mindestens einem Walzenpaar mit Walzen unterschiedlichen Typs,
wobei ein Walzenpaar aus einer harten Walze und einer Gummiwalze besteht, wobei die harte Walze eine im Umfang gerillte Struktur aufweist, während die Gummiwalze glatt ist und am Umfang langsamer als die harte Walze läuft
• Endtrocknung der Papierbahn, so dass der Wassergehalt in der Papierbahn, zwischen 15 Gew.-% und 4 Gew.-%liegt
• Überführung der Papierbahn in ein Glättwerk,
so dass das Papier in Längsrichtung eine Bruchdehnung von mindestens 15 % und in Querrichtung eine Bruchdehnung von mindestens 5 % aufweist.

2. Abdeckklebeband nach Anspruch 1,
**dadurch gekennzeichnet, dass**
die Faserstoffsuspension bei der Mahlung quetschend und fibrillierend, aber wenig schneidend bearbeitet wird, bevorzugt durch die Verwendung einer Kaskade von mehreren mit Lavascheiben bestücken Mahl-Aggregaten.

3. Abdeckklebeband nach Anspruch 1 oder 2,
**dadurch gekennzeichnet, dass**
der Mahlgrad der Faserstoffsuspension (bestimmt nach Schopper-Riegler) 25 bis 65 Deg SR, bevorzugt aber 30 bis 60 Deg SR beträgt.

4. Abdeckklebeband nach zumindest einem der Ansprüche 1 bis 3,
**dadurch gekennzeichnet, dass**
die Faserstoffsuspension in einem Holländer hydratisiert und gekräuselt wird.

5. Abdeckklebeband nach zumindest einem der vorherigen Ansprüche,
**dadurch gekennzeichnet, dass**
die Dosierung der gemahlenen Faserstoffdispersion auf ein Formersieb erfolgt.

6. Abdeckklebeband nach zumindest einem der vorherigen Ansprüche,
**dadurch gekennzeichnet, dass**
das Formen der Papierbahn auf der ersten Pressenstation erfolgt, bestehend aus einem Walzenpaar oder einer Folge von mehreren Walzenpaare gewählt aus der Gruppe:
a) Eine obere Walze mit einem strukturierten Profil und eine glatte (weiche) untere Walze mit einem glatten Standard Filz, wobei sich die Papierbahn zwischen der oberen Walze und dem Filz befindet.
b) Zwei glatte Walzen, zwischen denen sich ein strukturiertes Filz so befindet, dass es eine Papierbahn, die zwischen Filz und oberer Walze läuft, formen kann,
wobei sich die Papierbahn zwischen der oberen Walze und dem Filz befindet.
c) Eine obere Walze mit strukturiertem Profil und eine untere glatte Walze (ohne Filz)
d) Zwei glatte Walzen und ein glatter sowie ein strukturierter Filz, wobei sich die Papierbahn zwischen der oberen Walze und dem oberen Filz befindet.

7. Abdeckklebeband nach zumindest einem der vorherigen Ansprüche,
**dadurch gekennzeichnet, dass**
das Walzenpaar der zweiten Pressstation aus einer Stahlwalze und einer Gummiwalze besteht.

8. Abdeckklebeband nach zumindest einem der vorherigen Ansprüche,
**dadurch gekennzeichnet, dass**
während der zweiten, bevorzugt thermischen Trocknung eine Dehnung der Papierbahn in Längsrichtung durch eine exakt gesteuerte Voreilung der jeweils folgenden bahnführenden Walzen erfolgt, wobei die Dehnung in Längsrichtung bevorzugt so hoch eingestellt wird, dass die Höchstzugkraft der Papierbahn nahezu erreicht wird.

9. Abdeckklebeband nach zumindest einem der vorherigen Ansprüche,
**dadurch gekennzeichnet, dass**
der Wassergehalt in der Papierbahn nach der Endtrocknung der Papierbahn zwischen 10 Gew.-% und 8 Gew.-% liegt.

10. Abdeckklebeband nach zumindest einem der vorherigen Ansprüche,
**dadurch gekennzeichnet, dass**
das Trägermaterial aus einem Papier besteht, das in Längsrichtung eine Bruchdehnung von mindestens 20 % und in Querrichtung eine Bruchdehnung von mindestens 10 % und bevorzugt mindestens 15 % aufweist.

11. Abdeckklebeband nach zumindest einem der vorherigen Ansprüche,
**dadurch gekennzeichnet, dass**
das Flächengewicht des Trägermaterials bei 35 bis 250 g/m², bevorzugt bei 50 bis 200 g/m², ganz bevorzugt bei 70 bis 150 g/m² liegt.

12. Abdeckklebeband nach zumindest einem der vorherigen Ansprüche,
**dadurch gekennzeichnet, dass**
das Fasermaterial aus pflanzlichen Fasern besteht, die nicht aus Holz gewonnen werden (insbesondere Baumwolllinter, Hanf, Flachs, Esparto, Kenaf).

13. Abdeckklebeband nach zumindest einem der vorherigen Ansprüche,
**dadurch gekennzeichnet, dass**
die Selbstklebemasse basiert auf Naturkautschuk, Polyacrylaten, Styrolblockcopolymeren, Ethylenvinylacatat, Polyurethan, Poly-alpha-olefinen, Polyisobutylen, Styrol-Butadien-Kautschuk.

## Claims

1. Adhesive masking tape having a stretchable paper backing provided on at least one side with a solvent-based or solvent-free self-adhesive adhesive coating, the paper backing being composed of a paper produced in an operation consisting of the following steps:
• introduction of plant fibre material into a pulper
• mixing of the fibre material with water
• beating of the fibres to produce a fibre dispersion
• controlled feeding of the beaten fibre dispersion and continuous reduction of the water content to form a paper web
• initial drying of the paper web, so that its solids content is between 15% and 35% by weight
• forming of the paper web in a first press station
• second drying of the paper web, so that its solids content is between 50% and 60% by weight, and simultaneous stretching of the paper web in machine direction
• compaction of the paper web in the longitudinal direction and in the transverse direction at the same time in a second press station,
• which is composed of at least one roll pair with rolls of different type,
one roll pair being composed of a hard roll, and of a rubber roll, the hard roll having a peripherally grooved structure, while the rubber roll is smooth and runs slower at the periphery than the hard roll,
• final drying of the paper web, so that its water content is between 15% and 4% by weight,
• transfer of the paper web to a calender stack so that the paper in machine direction has a breaking elongation of at least 15% and in tranverse direction a breaking elongation of at least 5%.

2. Adhesive masking tape according to Claim 1, **characterized in that** the fibre suspension during beating is worked on with squeezing and fibrillation but with less cutting, preferably through the use of a cascade of two or more beater units fitted with lava disks.

3. Adhesive masking tape according to Claim 1 or 2, **characterized in that** the freeness of the fibre suspension (determined by the Schopper-Riegler method) is from 25 to 65 Deg SR, but preferably from 30 to 60 Deg SR.

4. Adhesive masking tape according to at least one of Claims 1 to 3, **characterized in that** the fibre suspension is hydrated and curled in a hollander.

5. Adhesive masking tape according to at least one of the preceding claims, **characterized in that** the controlled feeding of the beaten fibre dispersion is carried out onto a former wire.

6. Adhesive masking tape according to at least one of the preceding claims, **characterized in that** the forming of the paper web takes places on the first press station, which is composed of a roll pair or of a sequence of two or more roll pairs selected from the following group:
a) a top roll having a structured profile and a smooth (soft) bottom roll having a smooth standard felt, with the paper web being located between the top roll and the felt.
b) two smooth rolls between which a structured felt is located such that it is able to form a paper web which runs between felt and top roll, the paper web being located between the top roll and the felt.
c) a top roll having a structured profile, and a smooth bottom roll (without felt)
d) two smooth rolls and one smooth felt and one structured felt, with the paper web being located between the top roll and the top felt.

7. Adhesive masking tape according to at least one of the preceding claims, **characterized in that** the roll pair of the second press station is composed of a steel roll and of a rubber roll.

8. Adhesive masking tape according to at least one of the preceding claims, **characterized in that** during the second, preferably thermal, drying the paper web is stretched in the machine direction by means of a precisely controlled preacceleration of the consecutive web-guiding rolls, the stretch in the machine direction preferably being set at a level such that the ultimate tensile strength of the paper web is nearly attained.

9. Adhesive masking tape according to at least one of the preceding claims, **characterized in that** the water content in the paper web, after final drying of the paper web, is between 10% and 8% by weight.

10. Adhesive masking tape according to at least one of the preceding claims, **characterized in that** the backing material is composed of a paper which in machine direction has a breaking elongation of at least 20%, and in transverse direction a breaking elongation of at least 10% and preferably at least 15%.

11. Adhesive masking tape according to at least one of the preceding claims, **characterized in that** the basis weight of the backing material is from 35 to 250 g/m², preferably from 50 to 200 g/m², very preferably from 70 to 150 g/m².

12. Adhesive masking tape according to at least one of the preceding claims, **characterized in that** the fibre material is composed of non-wood-derived plant fibres (especially cotton linters, hemp, flax, esparto, kenaf).

13. Adhesive masking tape according to at least one of the preceding claims, **characterized in that** the self-adhesive composition is based on natural rubber, polyacrylates, styrene block copolymers, ethylene-vinyl acetate, polyurethane, poly-alpha-olefins, polyisobutylene, styrene-butadiene rubber.

## Revendications

1. Ruban de masquage comprenant un support papier extensible en matériau support, qui est pourvu au moins d'un côté d'un revêtement adhésif autocollant à base de solvant ou sans solvant, le support papier se composant d'un papier qui a été fabriqué par un procédé comprenant les étapes de procédé suivantes :
- addition de matière fibreuse végétale dans un désintégrateur,
- mélange de la matière fibreuse avec de l'eau,
- broyage des fibres pour produire une dispersion fibreuse,
- dosage de la dispersion fibreuse broyée et réduction continue de la teneur en eau pour former une nappe de papier,
- premier séchage de la nappe de papier, de sorte que la teneur en matière solide de la nappe de papier soit comprise entre 15 % en poids et 35 % en poids,
- formage de la nappe de papier dans un premier poste de pressage,
- deuxième séchage de la nappe de papier, de sorte que la teneur en matière solide de la nappe de papier soit comprise entre 50 et 60 % en poids, et étirage simultané de la nappe de papier dans la direction longitudinale,
- compression de la nappe de papier dans la direction longitudinale et simultanément dans la direction transversale dans un deuxième poste de pressage,
constitué d'au moins une paire de rouleaux avec des rouleaux de différents types,
une paire de rouleaux se composant d'un rouleau dur et d'un rouleau en caoutchouc,
le rouleau dur présentant une structure rainurée sur la périphérie tandis que le rouleau en caoutchouc est lisse et tourne sur sa périphérie plus lentement que le rouleau dur,
- séchage final de la nappe de papier, de sorte que la teneur en eau de la nappe de papier soit comprise entre 15 % en poids et 4 % en poids,
- transport de la nappe de papier dans une lisseuse,
de sorte que le papier présente, dans la direction longitudinale, une élongation à la rupture d'au moins 15 % et dans la direction transversale une élongation à la rupture d'au moins 5 %.

2. Ruban de masquage selon la revendication 1,
**caractérisé en ce que**
la suspension fibreuse est traitée pendant le broyage par écrasement et fibrillation, mais peu de coupure, de préférence en utilisant une cascade de plusieurs unités de broyage équipées de disques en pierre de lave.

3. Ruban de masquage selon la revendication 1 ou 2,
**caractérisé en ce que**
le degré de broyage de la suspension fibreuse (déterminé selon Schopper-Riegler) est de 25 à 65 deg. SR, de préférence toutefois de 30 à 60 deg. SR.

4. Ruban de masquage selon au moins l'une quelconque des revendications 1 à 3,
**caractérisé en ce que**
la suspension fibreuse est hydratée et ondulée dans une pile hollandaise.

5. Ruban de masquage selon au moins l'une quelconque des revendications précédentes,
**caractérisé en ce que**
le dosage de la dispersion fibreuse broyée s'effectue sur une toile de formage.

6. Ruban de masquage selon au moins l'une quelconque des revendications précédentes,
**caractérisé en ce que**
le formage de la nappe de papier s'effectue sur le premier poste de pressage, constitué d'une paire de rouleaux ou d'une série de plusieurs paires de rouleaux choisies parmi le groupe :
a) un rouleau supérieur avec un profil structuré et un rouleau inférieur (mou) lisse avec un feutre standard lisse, la nappe de papier se trouvant entre le rouleau supérieur et le feutre,
b) deux rouleaux lisses, entre lesquels se trouve un feutre structuré de telle sorte qu'il puisse former une nappe de papier qui passe entre le feutre et le rouleau supérieur, la nappe de papier se trouvant entre le rouleau supérieur et le feutre,
c) un rouleau supérieur avec un profil structuré et un rouleau inférieur lisse (sans feutre),
d) deux rouleaux lisses et un feutre lisse ainsi qu'un feutre structuré, la nappe de papier se trouvant entre le rouleau supérieur et le feutre supérieur.

7. Ruban de masquage selon au moins l'une quelconque des revendications précédentes,
**caractérisé en ce que**
la paire de rouleaux du deuxième poste de pressage se compose d'un rouleau en acier et d'un rouleau en caoutchouc.

8. Ruban de masquage selon au moins l'une quelconque des revendications précédentes,
**caractérisé en ce que**
pendant le deuxième séchage de préférence thermique, il se produit un étirage de la nappe de papier dans la direction longitudinale par une avance commandée exactement des rouleaux suivants respectifs guidant la nappe, l'étirage dans la direction longitudinale étant de préférence ajusté à un degré tel que la force de traction maximale de la nappe de papier soit pratiquement atteinte.

9. Ruban de masquage selon au moins l'une quelconque des revendications précédentes,
**caractérisé en ce que**
la teneur en eau de la nappe de papier est comprise entre 10 % en poids et 8 % en poids après le séchage final de la nappe de papier.

10. Ruban de masquage selon au moins l'une quelconque des revendications précédentes,
**caractérisé en ce que**
le matériau support se compose d'un papier qui présente, dans la direction longitudinale, une élongation à la rupture d'au moins 20 % et dans la direction transversale une élongation à la rupture d'au moins 10 % et de préférence d'au moins 15 %.

11. Ruban de masquage selon au moins l'une quelconque des revendications précédentes,
**caractérisé en ce que**
le grammage du matériau support est de 35 à 250 g/m², de préférence de 50 à 200 g/m², particulièrement préférablement de 70 à 150 g/m².

12. Ruban de masquage selon au moins l'une quelconque des revendications précédentes,
**caractérisé en ce que**
la matière fibreuse se compose de fibres végétales non obtenues à partir du bois (notamment peluche de coton, chanvre, lin, esparto, kenaf).

13. Ruban de masquage selon au moins l'une quelconque des revendications précédentes,
**caractérisé en ce que**
la composition autocollante est à base de caoutchouc naturel, de polyacrylates, de copolymères blocs de styrène, d'éthylènevinylacétate, de polyuréthane, de polyalphaoléfines, de polyisobutylène, de caoutchouc styrène-butadiène.
